# EUROPÄISCHE PATENTSCHRIFT

(11) **EP 0 796 398 B1**
(45) Veröffentlichungstag und Bekanntmachung des Hinweises auf die Patenterteilung: **26.08.1998**
(21) Anmeldenummer: 95941701.5
(22) Anmeldetag: 08.12.1995
(51) Int. Cl.: F16C 13/00, B21B 27/02, F16C 17/22

(54) **ZENTRIEREN EINER BUCHSE AUS ZUGSPANNUNGSEMPFINDLICHEM WERKSTOFF AUF EINER WELLE**
CENTRING A BUSH MADE OF A MATERIAL SENSITIVE TO TENSILE STRESS ON A SHAFT
CENTRAGE D'UN COUSSINET, CONSTITUE D'UN MATERIAU SENSIBLE AUX CONTRAINTES DE TRACTION, SUR UN ARBRE

(30) Priorität: 08.12.1994 DE 9419709 U
(43) Veröffentlichungstag der Anmeldung: 24.09.1997
(73) Patentinhaber: Sterling Fluid Systems (Germany) GmbH, 25524 Itzehoe (DE)
(72) Erfinder: BARANEK, Bodo, D-25560 Schenefeld (DE); MANN, Ralf, D-25588 Huje (DE); LANDOWSKI, Rainer, D-25594 Nutteln (DE)
(74) Vertreter: Glawe, Delfs, Moll & Partner
(86) Internationale Anmeldenummer: EP9504832
(87) Internationale Veröffentlichungsnummer: WO9618047

(56) Entgegenhaltungen:
- EP-A- 0 280 030
- EP-A- 0 345 214
- US-A- 5 040 398
- US-A- 5 197 808
- PATENT ABSTRACTS OF JAPAN vol. 14 no. 519 (M-1048) ,14.November 1990 & JP,A,02 217612 (NIPPON SEIKO KK) 30.August 1990,
- PATENT ABSTRACTS OF JAPAN vol. 14 no. 81 (M-0935) ,15.Februar 1990 & JP,A,01 295025 (NIPPON SEIKO KK) 28.November 1989, in der Anmeldung erwähnt
- PATENT ABSTRACTS OF JAPAN vol. 15 no. 109 (M-1093) ,15.März 1991 & JP,A,03 004026 (NGK SPARK PLUG CO LTD) 10.Januar 1991,

## Beschreibung

Aus funktionalen Gründen ist es oftmals notwendig, eine Lagerbuchse, mit möglichst geringem Spiel auf der zugehörigen Welle zu zentrieren. Dies kann im Hinblick auf die Wärmedehnung der Welle auf Schwierigkeiten stoßen, wenn die Buchse aus einem zugspannungsempfindlichen Werkstoff mit geringerem Wärmeausdehnungskoeffizienten als die Welle besteht, beispielsweise aus Keramik. Damit die Welle im oberen Bereich des Anwendungstemperaturintervalls die Buchse nicht sprengt, kann man dann gezwungen sein, das Spiel im unteren Bereich des Anwendungstemperaturintervalls größer zu wählen, als es funktionell zugelassen werden kann. Es ist bekannt, dies dadurch aufzufangen, daß federnde Anordnungen zwischen Welle und Buchse (EP-B 345 214, DE-C 37 06 365), oder federnde Zentrierringe, die die Buchse von außen umfassen (US-A 5197808) für spielfreie Zentrierung im gesamten Anwendungstemperaturintervall sorgen. Im letzteren Fall können der Innendurchmesser der Buchse und der Außendurchmesser der Welle so aufeinander abgestimmt sein, daß sie am oberen Ende des Anwendungstemperaturintervalls gleich sind und dann spielfrei und kraftübertragend zusammenwirken. Die federnden Teile sind jedoch schwer und aufwendig herzustellen.

Aus der JP-A 129 50 25 ist eine Anordnung bekannt, bei der zur Erleichterung der Buchsenmontage auf der Welle und zur Verhinderung eines Sprengens der Buchse durch die Welle die Buchse mit Spiel auf der Welle sitzt. Die Drehmitnahme der Buchse durch die Welle erfolgt über zwei zu beiden Seiten der Buchse fest auf der Welle sitzende Ringe. Die Ringe weisen dabei auf der der Buchse zugewandten Seite einen Vorsprung auf, der einen Bereich der Buchse axial übergreift, wobei zwischen dem Vorsprung und der Buchse radialer Spielsitz oder Festsitz vorliegen kann. Je nach Bemessung der Passung zwischen Ringvorsprung und Buchse kann jedoch beim Durchfahren des Anwendungstemperaturintervalls zwischen Buchse und Welle relativ großes Spiel vorliegen. Darüber hinaus kann aufgrund der größeren Wärmeausdehnung der Welle gegenüber der Keramikbuchse die Drehmitnahme der Keramikbuchse nicht mehr gewährleistet sein.

Der Erfindung liegt daher die Aufgabe zugrunde, eine Lageranordnung zu schaffen, die mit geringem Aufwand bei Durchfahren des Anwendungstemperaturintervalles möglichst geringes Zentrierspiel zwischen Buchse und Welle aufweist und bei der die Drehmitnahme der Buchse gewährleistet ist. Die Lösung besteht in den Merkmalen des Anspruchs 1.

Die Erfindung setzt der von innen auf die Buchse einwirkenden Dehnungscharakteristik der Wellenoberfläche zwei von außen auf die Buchse einwirkende Zentrierringe entgegen. Im kalten Bereich des Anwendungstemperaturintervalls, in welchem die Wellenoberfläche mit der Bohrung der Buchse ein relativ großes Spiel einschließt, sorgt die spielfreie Anlage der Zentrierbuchse an der Außenseite der Buchse für die Zentrierung. Im warmen Teil des Anwendungstemperaturbereichs übernimmt die Wellenoberfläche die Zentrierung während die Zentrierringe ein Spiel mit der Buchse einschließen. Während ein Übermaß der Welle gegenüber der Buchsenbohrung jedenfalls vermieden werden muß, ist es in diesem Zusammenhang durchaus statthaft, daß die auf eine Außenumfangsfläche der Buchse von außen einwirkende Innenumfangsfläche des Zentrierrings am kalten Ende des Anwendungstemperaturintervalls Untermaß gegenüber der Buchse aufweist, weil dies lediglich Druckspannungen in der Buchse zur Folge hat, die von dieser in der Regel gefahrlos aufgenommen werden können. Die Zentrierfunktion des Zentrierrings kann daher ggf. für einen größeren Temperaturbereich als diejenige der Welle vorgesehen werden. Erfindungsgemäß ist dabei der Außenumfang der Welle bzw. der Innenumfang der Buchse so bemessen, daß Buchse und Welle am oberen Ende des Anwendungstemperaturintervalles spielfrei aufeinandersitzen. Die Erfindung nimmt in Kauf, daß zwischen den Temperaturbereichen, in denen die Buchse von der Wellenumfangsfläche bzw. von dem Zentrierring spielfrei zentriert wird, ein Temperaturbereich verbleibt, in welchem die Buchse sowohl mit der Umfangsfläche der Welle als auch mit der Innenumfangsfläche des Zentrierrings Spiel einschließt. Jedoch ist dieses Spiel minimiert gegenüber dem Spiel, das ohne Verwendung der Zentrierringe zwischen der Buchse und der Welle am kalten Ende des Anwendungstemperaturintervalls auftreten würde. Es kann leicht so gering gehalten werden, daß es im Vergleich mit dem zulässigen Lagerspiel vernachlässigbar ist. Die Zentrierringe können einfach ausgeführt sein, da sie nicht die im genannten Anwendungstemperaturintervall zwischen der Buchse und den Zentrierringen auftretende Dehnungsdifferenz elastisch aufnehmen müssen.

Die zwei Zentrierringe, die von entgegengesetzten Stirnseiten der Buchse her auf diese einwirken, brauchen zwar nicht identisch zu sein; jedoch ist ihre Übereinstimmung meistens zweckmäßig.

Für die Verdrehsicherung der Buchse im Verhältnis zur Welle werden die zwei stirnseitig der Buchse vorgesehenen Ringe axial zusammengepreßt. Die axiale Klemmkraft setzt sich zusammen aus einer Vorspannkraft, die beispielsweise durch eine Wellenmutter aufgebracht wird, und einem Anteil, der sich aus der unterschiedlichen Längenausdehnung der Bauteile ergibt. Für eine sichere Klemmung ist es notwendig, daß auch bei erhöhter Temperatur eine ausreichende Klemmkraft gewährleistet ist. Damit dabei auf zusätzliche Federungselemente verzichtet werden kann, wird erfindungsgemäß vorgesehen, daß die Längenausdehnung der zusammen mit der Buchse unter Druckspannung stehenden Bauteile mindestens ebenso groß ist wie diejenige der des unter Zugspannung stehenden, entsprechenden Teils der Welle in dem entsprechenden Abschnitt. Der Wärmeausdehnungskoeffizient des Wellenwerkstoffs ist daher möglichst klein zu wählen, während zur Kompensation der sehr geringen Wärmedehnung der Keramikbuchse es erforderlich sein kann, für die Zentrierringe einen Werkstoff mit einem sehr hohen Ausdehnungskoeffizienten zu wählen oder zwischen den Zentrierringen oder einem Zentrierring und der zugehörigen Spanneinrichtung einen Teil aus einem Werkstoff mit sehr hohem Ausdehnungskoeffizienten einzuschalten, wobei die axialen Längen der Buchse und der Zentrierringe sowie ggf. der ergänzenden Bauteile so aufeinander abzustimmen sind, daß diese Teile in ihrer Gesamtheit das gewünschte Dehnungsverhalten aufweisen.

Wenn die Außenfläche der Buchse nicht radial überragt werden soll von stirnseitig vorgesehenen Zentrierringen, versieht man die Buchse stirnseitig zweckmäßigerweise mit einem Absatz, auf den die Zentrierringe einwirken können.

Der Ausdruck Anwendungstemperaturintervall wird für den Temperaturbereich verwendet, der von den in der Anwendung maximal und minimal vorkommenden Temperaturen eingeschlossen wird. Es kommt nicht darauf an, ob die Temperaturen der Welle, der Buchse und der Zentrierringe gleich sind.

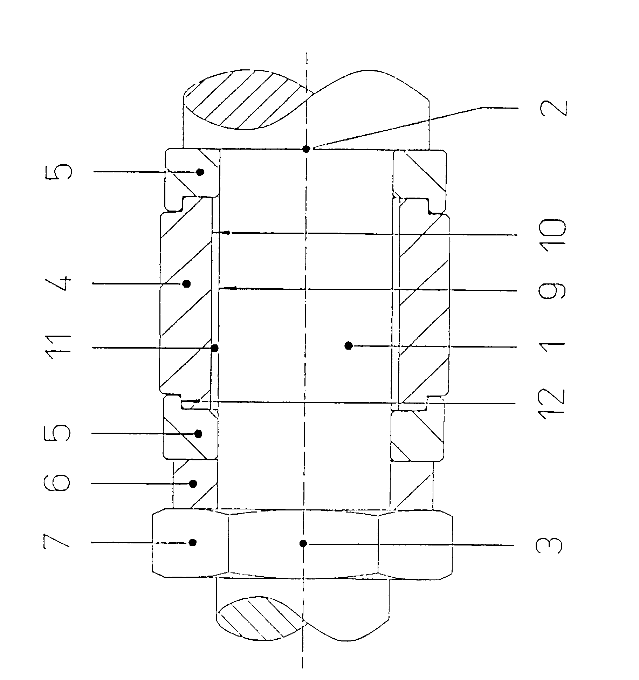

Die Erfindung wird im folgenden näher unter Bezugnahme auf die Zeichnung erläutert, die ein vorteilhaftes Ausführungsbeispiel in einem Längsschnitt veranschaulicht.

Auf der Welle 1, die beispielsweise aus Stahl besteht, bei 2 einen Wellenbund und bei 3 ein Gewinde aufweist, befindet sich die Buchse 4 zwischen den gegensinnig montierten Zentrierringen 5. Diese Anordnung wird über einen Zwischenring 6 von der auf dem Gewinde 3 befindlichen Mutter 7 gegen den Bund 2 axial verspannt. Zwischen der Außenumfangsfläche 9 der Welle und der Innenumfangsfläche 10 der Buchse 4 befindet sich im kalten Zustand (unteres Ende des Anwendungstemperaturintervalls) ein Spiel 11. Die Buchse 4 besitzt an beiden Enden zylindrische Ansätze etwas kleineren Außendurchmessers 12. Die Zentrierringe 5 weisen eine damit zusammenwirkende Bohrung auf, die in dem dargestellten Dehnungszustand am unteren Ende des Anwendungstemperaturintevalls denselben Innendurchmesser 12 aufweist oder ein wenig Untermaß besitzt. Die Zentrierringe 5 sind auf der Welle 1 zentriert. Ihr Werkstoff und ihr mit dem Außenumfang der Welle zusammenwirkender Zentrierdurchmesser sind so gewählt, daß diese Zentrierung mindestens im unteren, vorzugsweise auch im mittleren Anwendungstemperaturbereich erhalten bleibt.

Im dargestellten, kalten Zustand wird - wie gezeigt - die Zentrierung des Keramikrings 4 durch die Zentrierringe 5 bewirkt, die spielfrei mit dem Außenumfang 9 der Welle und mit dem Außenumfang des Keramikrings 4 zusammenwirken, wobei die zusammenwirkenden Umfangsflächen der Zentrierringe und des Keramikrings denselben Durchmesser 12 aufweisen. Steigt die Temperatur, so dehnen sich die Welle 1 und die Zentrierringe 5 im gleichen Maße und bleiben spielfrei verbunden. Hingegen dehnt sich der Keramikring 4 in geringerem Maße, so daß sich Spiel zwischen den Umfangsflächen mit dem Durchmesser 12 des Keramikrings 4 und der Zentrierringe 5 entwickelt, während das Spiel 11 zwischen dem Keramikring 4 und der Welle 1 sich vermindert. Im mittleren Anwendungstemperaturbereich ist das Spiel zwischen dem Keramikring und der Welle einerseits und den Zentrierringen andererseits etwa gleich groß. Da es aber nur halb so groß ist wie das maximal an der Welle vorzusehende Spiel, wird dadurch eine bedeutende Verbesserung gegenüber dem Zustand ohne die Zentrierringe erreicht. Wenn der Zentrierdurchmesser der Zentrierringe im kalten Zustand Untermaß gegenüber dem Keramikring aufweist, bleibt der spielfreie Zustand zwischen dem Keramikring und den Zentrierringen zunächst auch bei steigender Temperatur in einem Teil des Anwendungstemperaturintervalls erhalten. In jedem Fall ist das radiale Spiel des Keramikrings geringer als das zulässige Lagerspiel.

Die Drehmitnahme des Keramikrings erfolgt durch die von der Mutter 7 bewirkte axiale Klemmung. Die Summe der Wärmedehnungen des Keramikrings 4, der Zentrierringe 5, des Zwischenrings 6 und eines Teils der Mutter 7 sind so gewählt, daß sie der Wärmedehnung der Welle zwischen dem Bund 2 und dem Gewinde 3 im wesentlichen gleichen oder nicht wesentlich geringer sind. Da die Wärmedehnung des Keramikrings vergleichsweise gering ist, muß eine entsprechend größere Wärmedehnung bei den übrigen Ringteilen vorgesehen werden. Dies gilt zum einen für die Zentrierringe 5. Falls bei diesen der Wärmeausdehnungskoeffizient mit Rücksicht auf ihre Zentrierung auf der Welle nicht sehr hoch gewählt werden kann, wird der ggf. nur zu diesem Zweck vorgesehene Zwischenring 6 aus einem Werkstoff gewählt, dessen Wärmeausdehnungskoeffizient größer ist als der der Welle.

Die Anordnung ist beispielweise nützlich für die Befestigung von Lagerbuchsen in Pumpen, die bei hohen Temperaturen (beispielsweise mehrere 100°C) betrieben werden, wobei der Keramikring die Lagerbuchse bildet.

## Patentansprüche

1. Lageranordnung mit einer Welle (1), einer am unteren Ende eines vorbestimmten Anwendungstemperaturintervalls mit Spiel auf der Welle (1) sitzenden Lagerbuchse (4), deren Werkstoff zugspannungsempfindlich ist und einen geringeren Wärmeausdehnungskoeffizienten als die Welle (1) aufweist und deren Innenumfang mit dem Außenumfang der Welle ein am oberen Ende eines vorbestimmten Anwendungstemperaturintervalls gegen Null gehendes Spiel einschließt, und zwei Zentrierringen (5), deren Werkstoff einen höheren Wärmeausdehnungskoeffizienten als die Buchse (4) aufweist, die jeweils eine Innenumfangsfläche besitzen, die am unteren Ende des Anwendungstemperaturintervalls spielfrei eine Außenumfangsfläche der Buchse (4) umschließt, und die Zentrierringe im gesamten Anwendungstemperaturintervall gegenüber der Welle (1) zentriert sind, wobei die Buchse (4) in einem mittleren Bereich des Anwendungstemperaturintervalls sowohl gegenüber der Welle (1) als auch gegenüber dem Zentrierring (5) Spiel hat, dadurch gekennzeichnet, daß die Zentrierringe (5) zur Drehmitnahme der Buchse (4) axial zusammengepreßt sind, daß der Innenumfang der Buchse (4) bzw. der Außenumfang der Welle (1) so bemessen ist, daß am oberen Ende des Anwendungstemperaturintervalls der Innenumfang der Buchse (4) spielfrei an dem Außenumfang der Welle (1) anliegt und die Wärmedehnung der Bauteile (4,5,6,7) die buchsenseits zwischen den Stellen (2,3), an denen die die axiale Vorspannkraft für die Zentrierringe (5) erzeugenden Einrichtungen (2,3) mit der Welle (1) axialkraftübertragend verbunden sind, im wesentlichen gleich der Wärmedehnung des entsprechenden Abschnitts der Welle (1) ist.

## Claims

1. A bearing assembly with a shaft (1), a bearing bush (4) which is mounted with clearance on the shaft (1) at the lower end of a predetermined application temperature interval and the material of which is sensitive to tensile stress and has a lower coefficient of thermal expansion than the shaft (1), and the inner periphery of which encloses with the outer periphery of the shaft a clearance becoming nil at the upper end of a predetermined application temperature interval, and two centering rings (5), the material of which has a higher coefficient of thermal expansion than the bush (4) and which in each case have an inner peripheral surface which surrounds without clearance an outer peripheral surface of the bush (4) at the lower end of a predetermined application temperature interval, and over the entire application temperature interval the centering rings are centred with respect to the shaft (1), wherein in a middle range of the application temperature interval the bush (4) has clearance both with respect to the shaft (1) and with respect to the centering ring (5), characterised in that for rotational entrainment of the bush (4) the centering rings (5) are axially compressed, in that dimensions of the inner periphery of the bush (4) or the outer periphery of the shaft (1) are such that at the upper end of the application temperature interval the inner periphery of the bush (4) is applied without clearance against the outer periphery of the shaft (1) and the thermal expansion of the components (4,5,6,7), which, on the bush side between the locations (2,3) at which the means (2,3) generating the axial preloading force for the centring rings (5) are connected with the shaft (1) so as to transmit axial force, is substantially equal to the thermal expansion of the corresponding portion of the shaft (1).

## Revendications

1. Structure d'appui comportant un arbre (1), un coussinet de palier (4) reposant sur l'arbre (1) avec un certain jeu à l'extrémité inférieure d'un intervalle de températures d'utilisation prédéterminé, coussinet de palier dont le matériau est sensible à des contraintes de traction et présente un coefficient de dilatation thermique inférieur à celui de l'arbre (1) et dont le pourtour intérieur définit avec le pourtour extérieur de l'arbre un jeu tendant vers zéro à l'extrémité supérieure d'un intervalle de températures d'utilisation prédéterminé, ainsi que deux bagues de centrage (5), dont le matériau présente un coefficient de dilatation thermique supérieur à celui du coussinet (4) et qui possèdent chacune une surface périphérique intérieure qui entoure sans jeu une surface périphérique extérieure du coussinet (4) à l'extrémité inférieure de l'intervalle de températures d'utilisation, les bagues de centrage étant centrées par rapport à l'arbre (1), sur l'ensemble de l'intervalle de températures d'utilisation, tandis que le coussinet (4) présente un certain jeu, dans une plage médiane de l'intervalle de températures d'utilisation, aussi bien par rapport à l'arbre (1) que par rapport à la bague de centrage (5), caractérisée en ce que les bagues de centrage (5) sont repoussées l'une vers l'autre en direction axiale, pour entraîner en rotation le coussinet (4) avec elles, et en ce que le pourtour intérieur du coussinet (4) ou le pourtour extérieur de l'arbre (1) est dimensionné de telle sorte qu'à l'extrémité supérieure de l'intervalle de températures d'utilisation, le pourtour intérieur du coussinet (4) s'applique sans jeu sur le pourtour extérieur de l'arbre (1), et la dilatation thermique des composants (4, 5, 6, 7) qui se trouvent du côté du coussinet, entre les emplacements (2, 3) où les organes (2, 3) engendrant la force de précontrainte axiale pour les bagues de centrage (5) sont reliés à l'arbre (1) selon une liaison de transmission axiale de force, est sensiblement identique à la dilatation thermique du tronçon correspondant de l'arbre (1).
